# EUROPEAN PATENT APPLICATION

(11) **EP 4 159 672 A1**
(43) Date of publication of application: **05.04.2023**
(21) Application number: 21814615.7
(22) Date of filing: 06.04.2021
(51) Int. Cl.: C01B 3/58, C01B 3/32, C01B 3/56, C25B 1/02, H01M 8/0662

(54) **HYDROGEN SYSTEM AND HYDROGEN SYSTEM OPERATION METHOD**

(30) Priority: 28.05.2020 JP 2020093153; 17.12.2020 JP 2020209486
(71) Applicant: Panasonic Intellectual Property Management Co., Ltd., Osaka-shi, Osaka 540-6207 (JP)
(72) Inventor: KAMATA, Tomoya, Osaka-shi Osaka 540-6207 (JP); NAKAUE, Takayuki, Osaka-shi Osaka 540-6207 (JP); KANI, Yukimune, Osaka-shi Osaka 540-6207 (JP)
(74) Representative: Grünecker Patent- und Rechtsanwälte PartG mbB
(86) International application number: PCT/JP2021/014568
(87) International publication number: WO 2021/241009

(57) **Abstract**

A hydrogen system includes: a compressor that includes an anode, a cathode, and an electrolyte membrane interposed therebetween and generates compressed hydrogen by applying a voltage between the anode and the cathode to move protons extracted from anode fluid supplied to the anode to the cathode; a voltage applicator that applies the voltage between the anode and the cathode; a first flow passage through which a cathode off-gas containing the compressed hydrogen discharged from the cathode is supplied to the anode of the compressor; a first on-off valve disposed in the first flow passage; and a controller that causes the voltage applicator to apply the voltage with the first on-off valve opened during a period of time from startup of the hydrogen system until supply of the cathode off-gas to a hydrogen reservoir is started.

## Description

### Technical Field

The present disclosure relates to a hydrogen system and to a method for operating the hydrogen system.

### Background Art

In recent years, hydrogen is receiving attention as a clean alternative energy resource that can replace fossil fuels in terms of environmental problems such as global warning and energy problems such as exhaustion of petroleum resources. Carbon dioxide is one cause of global warming. However, even when hydrogen is combusted, only water is in principle generated, and no carbon dioxide is emitted. Moreover, almost no nitrogen oxides and other gases are emitted, so that hydrogen is expected to be used for clean energy. One example of an apparatus that utilizes hydrogen as fuel highly efficiently is a fuel cell. The development of fuel cells for automobile power sources and household power generation is in progress, and such fuel cells are becoming widespread.

In the coming hydrogen society, there is a need not only for development of a technique for producing hydrogen but also for development of a technique for storing hydrogen at high density and allowing a small volume of hydrogen to be transported or utilized at low cost. In particular, to facilitate the use of fuel cells used as distributed energy sources, it is necessary to improve the fuel supply infrastructure. To supply hydrogen stably, various studies have been conducted on production of high purity hydrogen, purification of hydrogen, and storage of hydrogen at high density.

For example, PTL 1 describes a hydrogen purification/compression system which includes an anode, a cathode, and an electrolyte membrane disposed therebetween and in which a voltage is applied between the anode and the cathode to purify and compress hydrogen. The layered structure including the anode, the electrolyte membrane, and the cathode is referred to as a membrane electrode assembly (MEA). PTL 1 discloses that gases remaining in the system are purged with nitrogen when the hydrogen purification/compression system is stopped.

For example, hydrogen gas used for fuel cell vehicles is generally charged into hydrogen tanks of the vehicles at a high pressure of several tens of MPa. In this case, the purity of the hydrogen gas charged into the hydrogen tanks of the vehicles is specified to be equal to or higher than 99.97% in International Standard (ISO 14687-2), and the upper limits of the amounts of impurities are also specified.

Therefore, PTL 2 proposes a method for charging high-purity hydrogen gas from a compressor into a filler at the start of a hydrogen production mode. Specifically, it is stated in paragraphs [0043] and [0044] in PTL 2 that, before compressed hydrogen in a cathode is supplied to the filler, a cathode off-gas, together with an anode off-gas, is supplied to a catalytic combustor while an ion pump is operated and is then subjected to combustion treatment.

### Citation List

### Patent Literature

PTL 1: Japanese Patent No. 6299027
PTL 2: Japanese Unexamined Patent Application Publication No. 2009-123432

### Summary of Invention

### Technical Problem

It is an object of the present disclosure to provide, for example, a hydrogen system that can have higher hydrogen compression efficiency than conventional systems and to provide a method for operating the hydrogen system.

### Solution to Problem

A hydrogen system in one aspect of the present disclosure includes: a compressor that includes an anode, a cathode, and an electrolyte membrane interposed therebetween and generates compressed hydrogen by applying a voltage between the anode and the cathode to move protons extracted from anode fluid supplied to the anode to the cathode; a voltage applicator that applies the voltage between the anode and the cathode; a first flow passage through which a cathode off-gas containing the compressed hydrogen discharged from the cathode is supplied to the anode of the compressor; a first on-off valve disposed in the first flow passage; and a controller that causes the voltage applicator to apply the voltage with the first on-off valve opened during a period of time from startup of the hydrogen system until supply of the cathode off-gas to a hydrogen reservoir is started.

A method for operating a hydrogen system in one aspect of the present disclosure includes the steps of: generating compressed hydrogen by applying a voltage between an anode of a compressor and a cathode thereof to move protons extracted from anode fluid supplied to the anode to the cathode through an electrolyte membrane; and applying a voltage between the anode and the cathode with a first on-off valve opened during a period of time from startup of the hydrogen system until supply of a cathode off-gas containing the compressed hydrogen discharged from the cathode of the compressor to a hydrogen reservoir is started, the first on-off valve being disposed in a first flow passage through which the cathode off-gas is supplied to the anode of the compressor.

### Advantageous Effects of Invention

The hydrogen system and the method for operating the hydrogen system in the above aspects of the present disclosure have an advantage in that their hydrogen compression efficiency can be higher than that of conventional systems and methods.

### Brief Description of Drawings

[Fig. 1] Fig. 1 is an illustration showing an example of a hydrogen system in a first embodiment.
[Fig. 2] Fig. 2 is an illustration showing an example of a hydrogen system in a second embodiment.
[Fig. 3] Fig. 3 is an illustration showing an example of a hydrogen system in a first modification of the second embodiment.
[Fig. 4] Fig. 4 is an illustration showing an example of a hydrogen system in a second modification of the second embodiment.
[Fig. 5] Fig. 5 is an illustration showing an example of a hydrogen system in a third embodiment.
[Fig. 6] Fig. 6 is an illustration showing an example of a hydrogen system in a first modification of the third embodiment.
[Fig. 7] Fig. 7 is an illustration showing an example of a hydrogen system in a second modification of the third embodiment.
[Fig. 8] Fig. 8 is an illustration showing an example of a hydrogen system in a third modification of the third embodiment.
[Fig. 9] Fig. 9 is an illustration showing an example of a hydrogen system in a fourth embodiment.
[Fig. 10] Fig. 10 is an illustration showing a hydrogen system in an Example of the fourth embodiment.
[Fig. 11] Fig. 11 is an illustration showing an example of a hydrogen system in a modification of the fourth embodiment.
[Fig. 12] Fig. 12 is an illustration showing an example of a hydrogen system in a fifth embodiment.

### Description of Embodiments

In PTL 1, the cathode off-gas containing impurities is supplied to the hydrogen tank at the startup of the hydrogen purification/compression system, and the purity of the hydrogen in the hydrogen tank may not satisfy the above-described International Standard in some cases.

Specifically, for example, a solid polymer membrane is generally used as the electrolyte membrane. However, the solid polymer membrane is not a fully dense membrane. Therefore, when the compositions of gases (e.g., the concentrations of impurity gas components) present in the anode and cathode disposed with the electrolyte membrane interposed therebetween differ from each other, interdiffusion (cross leakage) of the impurities and hydrogen through the electrolyte membrane occurs with the chemical potential differences due to the gas concentration differences serving as driving forces, and the gas composition in the anode finally becomes equal to the gas composition in the cathode. The cross leakage rates of the gases through the electrolyte membrane depend on the material of the electrolyte membrane and its thickness.

In the hydrogen purification/compression system, anodic and cathodic reactions described below occur. By applying a voltage between the anode and the cathode, hydrogen can be moved electrochemically and selectively from the anode side to the cathode side. Then, by sealing the cathode side, purified and compressed hydrogen can be obtained.

Anode: H₂ (low pressure) → 2H⁺ + 2e⁻

Cathode: 2H⁺ + 2e⁻ → H₂ (high pressure)

During the hydrogen purification and compression operation in the hydrogen purification/compression system, the amount of hydrogen moving electrochemically and selectively from the anode to the cathode as described above is sufficiently larger than the amount hydrogen moving from the cathode to the anode due to cross leakage and the amount of impurities moving from the anode to the cathode. Therefore, even when impurities are contained in the hydrogen-containing gas in the anode, the high purity of the hydrogen in the cathode gas is maintained. However, during the stoppage of the hydrogen purification and compression operation of the hydrogen purification/compression system, no hydrogen moves electrochemically from the anode to the cathode. Therefore, when the hydrogen-containing gas in the anode contains impurities, the influence of the impurities moving from the anode to the cathode due to cross leakage or the influence of hydrogen moving from the cathode to the anode due to cross leakage is large, so that the purity of the hydrogen in the cathode gas decreases. In this case, when the cathode off-gas is supplied to a hydrogen reservoir at the startup of the hydrogen purification/compression system without any treatment, the purity of the hydrogen in the hydrogen reservoir may decrease.

For example, if the gas pressure inside the cathode becomes equal to or lower than the outside pressure during the stoppage of the hydrogen compression operation of the hydrogen purification/compression system, impurities may be mixed from the outside into the cathode. In this case also, when the cathode off-gas is supplied to the hydrogen reservoir at the startup of the hydrogen purification/compression system without any treatment, the purity of the hydrogen in the hydrogen reservoir may decrease.

One problem with the invention disclosed in PTL 2 is that, although a reduction in the purity of the hydrogen supplied to the hydrogen reservoir is prevented, since the cathode gas is subjected to combustion treatment and then discharged to the outside, the hydrogen compression efficiency is low.

In view of the above circumstances, the present inventors have conducted extensive studies and found that the above problem can be mitigated by applying a voltage between the anode and the cathode while a cathode off-gas containing impurities is supplied to the anode of the compressor during a period of time from the startup until the supply of the cathode off-gas to the hydrogen reservoir is started. Thus, the inventors have arrived at the following aspects of the present disclosure.

A hydrogen system according to a first aspect of the present disclosure includes: a compressor that includes an anode, a cathode, and an electrolyte membrane interposed therebetween and generates compressed hydrogen by applying a voltage between the anode and the cathode to move protons extracted from anode fluid supplied to the anode to the cathode; a voltage applicator that applies the voltage between the anode and the cathode; a first flow passage through which a cathode off-gas containing the compressed hydrogen discharged from the cathode is supplied to the anode of the compressor; a first on-off valve disposed in the first flow passage; and a controller that causes the voltage applicator to apply the voltage with the first on-off valve opened during a period of time from startup of the hydrogen system until supply of the cathode off-gas to a hydrogen reservoir is started.

With the hydrogen system according to the present aspect having the structure described above, the hydrogen compression efficiency can be improved as compared to that of conventional systems.

Specifically, for example, during the stoppage of the hydrogen compression operation of the hydrogen system, since no hydrogen electrochemically moves from the anode to the cathode, the influence of impurity cross leakage that occurs so as to reduce the difference in chemical potential due to the concentrations of impurity gases present in the anode and the cathode increases. In this case, when the cathode off-gas is supplied to the hydrogen reservoir at the startup of the hydrogen system without any treatment, the purity of the hydrogen in the hydrogen reservoir may decrease.

For example, if the gas pressure in the cathode becomes equal to or lower than the outside pressure during the stoppage of the hydrogen compression operation of the hydrogen system, impurities may be mixed into the cathode from the outside. In this case also, when the cathode off-gas is supplied to the hydrogen reservoir at the startup of the hydrogen system without any treatment, the purity of the hydrogen in the hydrogen reservoir may decrease.

However, in the hydrogen system according to the present aspect, the voltage applicator applies the voltage with the first on-off valve opened during a period of time from the startup until the supply of the cathode off-gas to the hydrogen reservoir is started. In this case, the hydrogen in the cathode off-gas containing impurities and supplied to the anode is again supplied to the cathode through the electrochemical reactions. Therefore, with the hydrogen system according to the present aspect, the hydrogen in the cathode off-gas to be supplied to the hydrogen reservoir can be highly purified.

In the hydrogen system according to the present aspect, the cathode off-gas containing impurities is effectively reused as hydrogen-containing gas to be supplied to the anode. Therefore, the efficiency of the hydrogen system is improved as compared to that when the cathode off-gas is subjected to combustion treatment and then discharged to the outside of the system as in PTL 2.

In the hydrogen system according to the present aspect, the voltage applicator applies the voltage between the anode and the cathode with the first on-off valve opened during a period of time from the startup until the supply of the cathode off-gas to the hydrogen reservoir is started, so that the gas pressure inside the cathode can be higher than that when the voltage is not applied. Therefore, in the hydrogen system according to the present aspect, the cathode off-gas containing impurities can be easily supplied from the cathode to the anode at the startup of the hydrogen system.

A hydrogen system according to a second aspect of the present disclosure is the hydrogen system according to the first aspect, wherein the controller may cause the voltage applicator to start application of the voltage and then cause the first on-off valve to open.

In the hydrogen system according to the present aspect having the structure described above, the cathode off-gas containing impurities can be supplied to the anode of the compressor more appropriately than when the first on-off valve is opened before the voltage applicator starts the application of the voltage. For example, even when the gas pressure inside the cathode is equal to or lower than the gas pressure inside the anode at the startup, the gas pressure inside the cathode can be increased by applying the voltage between the anode and the cathode. Therefore, in the hydrogen system according to the present aspect, the cathode off-gas containing impurities can be easily supplied from the cathode to the anode at the startup of the hydrogen system.

A hydrogen system according to a third aspect of the present disclosure is the hydrogen system according to the first or second aspect, wherein the hydrogen system may further include a second flow passage through which the cathode off-gas is supplied to the hydrogen reservoir and a second on-off valve disposed in the second flow passage, and wherein the controller may cause the first on-off valve to open before the second on-off valve is opened.

In the hydrogen system according to the present aspect having the structure described above, by opening the first on-off valve before the second on-off valve is opened, the supply of the cathode off-gas containing impurities to the hydrogen reservoir can be reduced as compared to that when the first on-off valve and the second on-off valve are opened simultaneously and that when the timing at which the first on-off valve is opened and the timing at which the second on-off valve is opened are reversed.

A hydrogen system according to a fourth aspect of the present disclosure is the hydrogen system according to the third aspect, wherein the first flow passage may branch off from the second flow passage.

In the hydrogen system according to the present aspect having the structure described above, portions for discharging the cathode off-gas from the cathode of the compressor can be unified.

A hydrogen system according to a fifth aspect of the present disclosure is the hydrogen system according to the fourth aspect, wherein the hydrogen system may further include a first check valve disposed in the second flow passage at a position downstream of a position at which the first flow passage branches off.

In the hydrogen system according to the present aspect having the structure described above, the first check valve is disposed in the second flow passage at the position downstream of the position at which the first flow passage branches off. Therefore, even when the first on-off valve disposed in the first flow passage is opened during a period of time from the startup until the supply of the cathode off-gas to the hydrogen reservoir is started, the amount of hydrogen passing through the first flow passage can be appropriately limited.

For example, when the high pressure hydrogen generated in the cathode is supplied to the hydrogen reservoir through the second flow passage with no first check valve provided in the second flow passage, there is a possibility that the hydrogen in the hydrogen reservoir migrates through the second flow passage and the first flow passage in this order when the first on-off valve disposed in the first flow passage is opened. However, in the hydrogen system according to the present aspect, the first check valve is disposed in the second flow passage at the position downstream of the position at which the first flow passage branches off, so that the above possibility can be reduced. A reduction in the efficiency of the hydrogen compression operation of the compressor can thereby be prevented.

By closing the second on-off valve disposed in the second flow passage, the backflow of the hydrogen in the hydrogen reservoir into the first flow passage can be limited. However, if the second on-off valve malfunctions, it is difficult to limit the backflow of the hydrogen into the first flow passage.

However, in the hydrogen system according to the present aspect, since the first check valve used has a simple structure, the above problem can be mitigated.

A hydrogen system according to a sixth aspect of the present disclosure is the hydrogen system according to any one of the first to fifth aspects, wherein the anode fluid may be hydrogen-containing gas, and wherein the first flow passage may be connected to a third flow passage through which the hydrogen-containing gas is supplied to the anode of the compressor.

In the hydrogen system according to the present aspect having the structure described above, when the first on-off valve disposed in the first flow passage is opened, the cathode off-gas containing the compressed hydrogen discharged from the cathode of the electrochemical hydrogen pump can be supplied to the anode through the first flow passage and the third flow passage, so that it is unnecessary to discharge the cathode off-gas to the outside of the system. Therefore, in the hydrogen system according to the present aspect, the cathode off-gas containing impurities is effectively reused as the hydrogen-containing gas to be supplied to the anode, so that the efficiency of the hydrogen system is improved as compared to that when the cathode off-gas is discharged to the outside of the system.

A hydrogen system according to a seventh aspect of the present disclosure is the hydrogen system according to the sixth aspect, wherein the hydrogen system may further include a second check valve disposed in the first flow passage at a position upstream of a position at which the first flow passage merges with the third flow passage, the second check valve preventing a flow in a direction opposite to a flow of the cathode off-gas discharged from the cathode of the compressor.

In the hydrogen system according to the present aspect having the structure described above, the second check valve is disposed in the first flow passage. Therefore, even if the gas pressure inside the cathode is lower than the supply pressure of the hydrogen-containing gas flowing through the third flow passage when the first on-off valve disposed in the first flow passage is opened, the backflow of the low-purity hydrogen-containing gas flowing through the third flow passage to the cathode can be prevented.

A hydrogen system according to an eighth aspect of the present disclosure is the hydrogen system according to the sixth or seventh aspect, wherein the hydrogen system may further include a third check valve disposed in the third flow passage at a position upstream of a position at which the first flow passage merges with the third flow passage, the third check valve preventing a flow in a direction opposite to a flow of the hydrogen-containing gas to be supplied to the anode of the compressor.

In the hydrogen system according to the present aspect having the structure described above, the third check valve is disposed in the third flow passage, so that, when the first on-off valve disposed in the first flow passage is opened, the high-pressure cathode off-gas to be supplied from the cathode to the anode can be prevented from flowing into an anode gas supply system designed to be operated at low pressure. Therefore, in the hydrogen system according to the present aspect, the degree of damage to devices disposed in the anode gas supply system and designed to be operated at low pressure can be reduced as compared to that when the third check valve is not provided in the third flow passage.

By closing an appropriate on-off valve disposed in the third flow passage, the high-pressure cathode off-gas can be prevented from flowing into the anode gas supply system designed to be operated at low pressure. However, if this on-off valve malfunctions, it is difficult to prevent the flow of the cathode off-gas into the anode gas supply system.

However, the hydrogen system according to the present aspect uses the third check valve having a simple structure, so that the above problem can be mitigated.

A hydrogen system according to a ninth aspect of the present disclosure is the hydrogen system according to any one of the first to eighth aspects, wherein the anode fluid may be hydrogen-containing gas, wherein the hydrogen system may further include a hydrogen generator that generates the hydrogen-containing gas through a reforming reaction using a raw material, and wherein the first flow passage may be connected to the hydrogen generator.

In the hydrogen system according to the present aspect having the structure described above, when the first on-off valve disposed in the first flow passage is opened, the cathode off-gas containing the compressed hydrogen discharged from the cathode of the electrochemical hydrogen pump can be supplied to the hydrogen generator through the first flow passage, so that it is unnecessary to discharge the cathode off-gas to the outside of the system. Therefore, in the hydrogen system according to the present aspect, the hydrogen in the cathode off-gas containing impurities can be effectively reused in the hydrogen generator, so that the efficiency of the hydrogen system is improved as compared to that when the cathode off-gas is discharged to the outside of the system.

A hydrogen system according to a tenth aspect of the present disclosure is the hydrogen system according to the ninth aspect, wherein the hydrogen system may further include a reactant flow passage through which a reactant for the reforming reaction is supplied to the hydrogen generator, and wherein the first flow passage may merge with the reactant flow passage.

In the hydrogen system according to the present aspect having the structure described above, when the first on-off valve disposed in the first flow passage is opened, the cathode off-gas containing the compressed hydrogen discharged from the cathode of the electrochemical hydrogen pump can be supplied to the hydrogen generator through the first flow passage and the reactant flow passage, so that it is unnecessary to discharge the cathode off-gas to the outside of the system. Therefore, in the hydrogen system according to the present aspect, the cathode off-gas containing impurities is mixed with the reactant, and therefore the hydrogen in the cathode off-gas is effectively reused in the hydrogen generator, so that the efficiency of the hydrogen system is improved as compared to that when the cathode off-gas is discharged to the outside of the system.

A hydrogen system according to an eleventh aspect of the present disclosure is the hydrogen system according to the tenth aspect, wherein the hydrogen system may further include a fourth check valve disposed in the reactant flow passage at a position upstream of a position at which the first flow passage merges with the reactant flow passage, the fourth check valve preventing a flow in a direction opposite to a flow of the reactant to be supplied to the hydrogen generator.

In the hydrogen system according to the present aspect having the structure described above, the fourth check valve is disposed in the reactant flow passage. Therefore, when the first on-off valve disposed in the first flow passage is opened, the high-pressure cathode off-gas to be supplied from the cathode to the hydrogen generator is prevented from flowing into a reactant supply system designed to be operated at low pressure. Therefore, in the hydrogen system according to the present aspect, the degree of damage to devices disposed in the reactant supply system and designed to be operated at low pressure can be reduced as compared to that when the fourth check valve is not provided in the reactant flow passage.

By closing an appropriate on-off valve disposed in the reactant flow passage, the high-pressure cathode off-gas can be prevented from flowing into the reactant supply system designed to be operated at low pressure. However, if this on-off valve malfunctions, it is difficult to prevent the flow of the cathode off-gas into the reactant supply system.

However, the hydrogen system according to the present aspect uses the fourth check valve having a simple structure, so that the above problem can be mitigated.

A hydrogen system according to a twelfth aspect of the present disclosure is the hydrogen system according to the tenth or eleventh aspect, wherein the reactant may be the raw material.

A hydrogen system according to a thirteenth aspect of the present disclosure is the hydrogen system according to any one of the first to twelfth aspects, wherein the hydrogen system may further include: a third flow passage through which the anode fluid to be supplied to the anode flows and with which the first flow passage merges; and a third on-off valve disposed in the third flow passage at a position upstream of a position at which the first flow passage merges with the third flow passage, and wherein the controller may cause the voltage applicator to apply the voltage with the first on-off valve opened and the third on-off valve closed.

In the hydrogen system according to the present aspect having the structure described above, the voltage applicator applies the voltage with the first on-off valve opened and the third on-off valve closed during a period of time from the startup until the supply of the cathode off-gas to the hydrogen reservoir is started, and the hydrogen in the cathode off-gas containing impurities and supplied to the anode is thereby supplied to the cathode through the electrochemical reactions. Therefore, in the hydrogen system according to the present aspect, the purity of the hydrogen in the cathode off-gas to be supplied to the hydrogen reservoir can be increased. In the hydrogen system according to the present aspect, the cathode off-gas containing impurities is effectively reused as the hydrogen-containing gas to be supplied to the anode. Therefore, the efficiency of the hydrogen system is improved as compared to that when the cathode off-gas is discharged to the outside of the system.

In the hydrogen system according to the present aspect, by closing the third on-off valve disposed in the third flow passage when the first on-off valve disposed in the first flow passage is opened, the high-pressure cathode off-gas to be supplied from the cathode to the anode can be prevented from flowing into the anode gas supply system designed to be operated at low pressure. Therefore, in the hydrogen system according to the present aspect, the degree of damage to devices disposed in the anode gas supply system and designed to be operated at low pressure can be reduced as compared to that when the third on-off valve is not closed.

A hydrogen system according to a fourteenth aspect of the present disclosure is the hydrogen system according to any one of the first to eighth aspects, wherein the anode fluid may be hydrogen-containing gas, wherein the hydrogen system may further include a hydrogen purifier that increases the concentration of the hydrogen in the hydrogen-containing gas, and wherein the first flow passage may be connected to the hydrogen purifier.

In the hydrogen system according to the present aspect having the structure described above, when the first on-off valve disposed in the first flow passage is opened, the cathode off-gas containing the compressed hydrogen discharged from the cathode of the electrochemical hydrogen pump can be supplied to the hydrogen purifier through the first flow passage, so that it is unnecessary to discharge the cathode off-gas to the outside of the system. Therefore, in the hydrogen system according to the present aspect, the hydrogen in the cathode off-gas containing impurities can be effectively reused in the hydrogen purifier, so that the efficiency of the hydrogen system is improved as compared to that when the cathode off-gas is discharged to the outside of the system.

A method for operating a hydrogen system according to a fifteenth aspect of the present disclosure includes the steps of: generating compressed hydrogen by applying a voltage between an anode of a compressor and a cathode thereof to move protons extracted from anode fluid supplied to the anode to the cathode through an electrolyte membrane; and applying a voltage between the anode and the cathode with a first on-off valve opened during a period of time from startup of the hydrogen system until supply of a cathode off-gas containing the compressed hydrogen discharged from the cathode of the compressor to a hydrogen reservoir is started, the first on-off valve being disposed in a first flow passage through which the cathode off-gas is supplied to the anode of the compressor.

With the hydrogen system operating method according to the present aspect, hydrogen compression efficiency can be improved as compared to that with a conventional method. The details of the operational advantages of the hydrogen system operating method according to the present aspect are the same as those of the hydrogen system according to the first aspect, and their descriptions will be omitted.

Embodiment of the present disclosure will be described with reference to the accompanying drawings. The embodiments described below show examples of the above aspects. Therefore, shapes, materials, components, arrangement positions of the components, and connection forms of the components, etc. shown below are merely examples and do not limit the aspects described above, unless these features are stated in the claims. Among the components in the following description, components not stated in the independent claim defining the broadest concept of the aspects are described as optional components. In the drawings, descriptions of components with the same reference symbols may be omitted as appropriate. The drawings illustrate components schematically for the sake of facilitating understanding, and their shapes, dimensional ratio, etc. may not be accurately illustrated.

### (First embodiment)

The anode fluid in the compressor described above may be any of various gasses and liquids so long as it is a fluid that generates protons through an oxidation reaction in the anode.

For example, when the compressor is an electrochemical hydrogen pump, the anode fluid may be hydrogen-containing gas. In this case, the oxidation reaction of hydrogen (H₂) in the hydrogen-containing gas is performed in an anode catalyst layer.

For example, when the compressor is a water electrolyzer, the anode fluid may be liquid water. In this case, an electrolysis reaction of water is performed in the anode catalyst layer.

In the description of the following embodiments of the present disclosure, the anode fluid is hydrogen-containing gas, and the structures and operations of an electrochemical hydrogen pump used as an example of the compressor will be described.

### [Device structure]

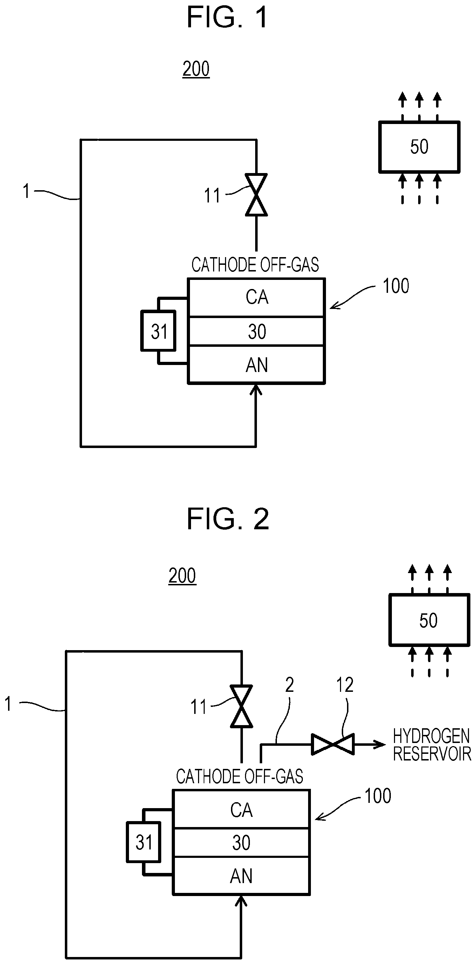

Fig. 1 is an illustration showing an example of a hydrogen system according to a first embodiment.

In the example shown in Fig. 1, the hydrogen system 200 includes an electrochemical hydrogen pump 100, a first flow passage 1, a first on-off valve 11, a voltage applicator 31, and a controller 50.

A cell (MEA) of the electrochemical hydrogen pump 100 includes an electrolyte membrane 30, an anode AN, and a cathode CA. The electrochemical hydrogen pump 100 may include a stack prepared by stacking a plurality of the above cells. The details of the stack will be described later.

The electrochemical hydrogen pump 100 is a device that generates compressed hydrogen by applying a voltage between the anode AN and the cathode CA disposed with the electrolyte membrane 30 interposed therebetween to move protons extracted from hydrogen-containing gas supplied to the anode AN to the cathode CA. The hydrogen-containing gas may be, for example, hydrogen gas generated by electrolysis of water or a reformed gas generated by a reforming reaction of a hydrocarbon raw material. The details of the voltage applicator 31 for the application of the voltage will be described later.

The anode AN is disposed on a first principal surface of the electrolyte membrane 30. The anode AN is an electrode including an anode catalyst layer and an anode gas diffusion layer. The cathode CA is disposed on a second principal surface of the electrolyte membrane 30. The cathode CA is an electrode including a cathode catalyst layer and a cathode gas diffusion layer. Therefore, the electrolyte membrane 30 is sandwiched between the anode AN and the cathode CA so as to be in contact with both the anode catalyst layer and the cathode catalyst layer.

The electrolyte membrane 30 may have any structure so long as it has proton conductivity. Examples of the electrolyte membrane 30 include fluorine-based polymer electrolyte membranes and hydrocarbon-based electrolyte membranes. Specific examples of the electrolyte membrane 30 used include, but not limited to, Nafion (registered trademark, manufactured by DuPont) and Aciplex (registered trademark, manufactured by Asahi Kasei Corporation).

The anode catalyst layer is disposed on the first principal surface of the electrolyte membrane 30. The anode catalyst layer contains carbon that can support a catalyst metal (e.g., platinum) such that the catalyst metal is dispersed therein, but this is not a limitation.

The cathode catalyst layer is disposed on the second principal surface of the electrolyte membrane 30. The cathode catalyst layer contains carbon that can support a catalyst metal (e.g., platinum) such that the catalyst metal is dispersed therein, but this is not a limitation.

No particular limitation is imposed on the methods for preparing the catalysts in the cathode catalyst layer and the anode catalyst layer, and any of various methods can be used. For example, a carbon-based powder may be used, and examples thereof include powders of graphite, carbon black, and electrically conductive activated carbon. No particular limitation is imposed on the method used to cause platinum or another catalyst metal to be supported on a carbon carrier. For example, a method such as powder mixing or liquid phase mixing may be used. Examples of the liquid phase mixing include a method in which a carrier such as carbon is dispersed in a catalyst component colloidal solution so that the catalyst component adsorbs on the carrier. No particular limitation is imposed on the supported state of the catalyst metal such as platinum supported on the carrier. For example, the catalyst metal may be formed into fine particles, and the fine particles may be highly dispersed and supported on the carrier.

The cathode gas diffusion layer is disposed on the cathode catalyst layer. The cathode gas diffusion layer is formed of a porous material and has electrical conductivity and gas diffusibility. Preferably, the cathode gas diffusion layer has elasticity that appropriately allows the cathode gas diffusion layer to follow the displacement and deformation of components caused by the differential pressure between the anode AN and the cathode CA during the operation of the electrochemical hydrogen pump 100. For example, a carbon fiber sintered product can be used as a substrate of the cathode gas diffusion layer, but this is not a limitation.

The anode gas diffusion layer is disposed on the anode catalyst layer. The anode gas diffusion layer is formed of a porous material and has electrical conductivity and gas diffusibility. Preferably, the anode gas diffusion layer has stiffness high enough to withstand the pressing force by the electrolyte membrane 30 pressed due to the differential pressure during the operation of the electrochemical hydrogen pump 100. For example, a carbon particle sintered body or a titanium particle sintered body coated with a noble metal such as platinum can be used as a substrate of the anode gas diffusion layer, but this is not a limitation.

Although not shown in Fig. 1, members and devices necessary for the hydrogen compression operation of the hydrogen system 200 are appropriately provided.

For example, a pair of separators may be used to sandwich the anode AN and the cathode CA externally. In this case, the separator in contact with the anode AN is an electrically conductive plate-shaped member for supplying the hydrogen-containing gas to the anode AN. The plate-shaped member includes a serpentine gas flow passage through which the hydrogen-containing gas to be supplied to the anode AN flows. The separator in contact with the cathode CA is an electrically conductive plate-shaped member that allows hydrogen to be extracted from the cathode CA. The plate-shape member includes a gas flow passage through which the hydrogen extracted from the cathode CA flows.

In the electrochemical hydrogen pump 100, sealing members such as gaskets are generally provided on both sides of a cell so as to prevent the high-pressure hydrogen from leaking to the outside and integrated in advance with the cell to assemble the electrochemical hydrogen pump 100. The separators are disposed on the outer side of the cell to mechanically fix the cell and electrically connect the cell to adjacent cells.

In a general stack structure, about 10 to about 200 cells and separators are stacked alternately. The stack is held between end plates with current collectors and insulating plates interposed therebetween, and the end plates are tightened with tightening rods. In this case, to supply an appropriate amount of the hydrogen-containing gas to the gas flow passage of each of the separators, it is necessary that the separators be configured such that downstream ends of groove-shaped passages that branch off from an appropriate conduit are connected to the respective gas flow passages of the separators. The above configured conduit line is referred to as a manifold, and the manifold is composed of, for example, a series of through holes formed in appropriate portions of members included in the stack.

The hydrogen system 200 may further include a temperature detector that detects the temperature of the cells, a temperature controller that controls the temperature of the cells, a dew point controller that controls the dew point of the hydrogen-containing gas to be supplied to the anodes AN, etc.

The above unillustrated members and devices are merely examples and are not limited to the above examples.

Next, the structure of the flow passage in the hydrogen system 200 in the present embodiment will be described.

The first flow passage 1 is a flow passage through which the cathode off-gas containing compressed hydrogen discharged from the cathode CA of the electrochemical hydrogen pump 100 is supplied to the anode AN of the electrochemical hydrogen pump 100. The upstream end of the first flow passage 1 may be connected to any position so long as the first flow passage 1 is in communication with the cathode CA of the electrochemical hydrogen pump 100. When the electrochemical hydrogen pump 100 includes the stack described above, the upstream end of the first flow passage 1 may be in communication with, for example, a manifold for extraction of the cathode off-gas. The downstream end of the first flow passage 1 may be connected to any position so long as the cathode gas can be supplied from the cathode CA to the anode AN. For example, the downstream end of the first flow passage 1 may be connected to an appropriate portion in communication with the anode AN. Specific examples of this connection structure will be described in third, fourth, and fifth embodiments.

Examples of the hydrogen reservoir include a hydrogen tank. The hydrogen reservoir may be in the form of a container into which hydrogen is directly charged without using a hydrogen storage material such as a hydrogen storage alloy or in the form of a container containing a hydrogen storage material such as a hydrogen storage alloy to store hydrogen.

The first on-off valve 11 is a valve disposed in the first flow passage 1. The first on-off valve 11 may have any structure so long as it can open and close the first flow passage 1. Examples of the first on-off valve 11 include, but not limited to, drive valves driven by nitrogen gas etc. and electromagnetic valves.

The voltage applicator 31 is a device that applies a voltage between the anode AN and the cathode CA. The voltage applicator 31 may have any structure so long as the voltage can be applied between the anode AN and the cathode CA. In the example shown in Fig. 1, a high-potential-side terminal of the voltage applicator 31 is connected to the anode AN, and a low-potential-side terminal of the voltage applicator 31 is connected to the cathode CA. Examples of the voltage applicator 31 include DC/DC converters and AC/DC converters. When the voltage applicator 31 is connected to a DC power source such as a solar cell, a fuel cell, or a battery, a DC/DC convertor is used. When the voltage applicator 31 is connected to an AC power source such as a commercial power source, an AC/DC converter is used. The voltage applicator 31 may be, for example, an electric power-type power supply in which the voltage applied between the anode AN and the cathode CA and the current flowing between the anode AN and the cathode CA are controlled such that the power supplied to the electrochemical hydrogen pump 100 is adjusted to a prescribed set value.

In the hydrogen system 200, the voltage applicator 31 is used to cause a current to flow between the anode AN and cathode CA of the electrochemical hydrogen pump 100 in the manner described above. Therefore, in the electrochemical hydrogen pump 100, by applying a voltage between the anode AN and the cathode CA using the voltage applicator 31, hydrogen in the hydrogen-containing gas supplied to the anode AN is moved to the cathode CA, and compressed hydrogen can thereby be generated.

The controller 50 causes the voltage applicator 31 to apply the above voltage with the first on-off valve 11 opened during a period of time from the startup until the supply of the cathode off-gas to the hydrogen reservoir is started. The controller 50 may control the entire operation of the hydrogen system 200. The term "startup" means the startup of the hydrogen system 200. For example, the user may perform an appropriate startup operation to start the hydrogen system 200, or the hydrogen system 200 may be started automatically at prescribed startup time.

The timing for opening the first on-off valve 11 and its opening interval may be set freely so long as they are within a period of time from the startup of the hydrogen system 200 until the supply of the cathode off-gas to the hydrogen reservoir is started.

For example, when the downstream end of the first flow passage 1 is connected to an appropriate gas supply flow passage, if the gas pressure inside the cathode CA is higher than the gas pressure at the connection portion of the gas supply flow passage, the first on-off valve 11 may be opened without the application of the voltage between the anode AN and the cathode CA. However, when the gas pressure inside the cathode CA is equal to or lower than the gas pressure at the connection portion of the gas supply flow passage, the voltage is applied between the anode AN and the cathode CA to increase the gas pressure inside the cathode, and then the first on-off valve 11 is opened.

The controller 50 includes, for example, an arithmetic circuit (not shown) and a storage circuit (not shown) that stores a control program. Examples of the arithmetic circuit includes MPUs and CPUs. Examples of the storage circuit include memories. The controller 50 may be a single controller that performs centralized control or may include a plurality of controllers that perform decentralized control in a synergistic manner.

### [Operation]

An example of the hydrogen compression operation of the hydrogen system 200 will be described with reference to the drawings. For example, the arithmetic circuit of the controller 50 may read a control program from the storage circuit of the controller 50 to perform the following operation. However, it is not always necessary to perform the following operation using the controller 50. The operator may perform part of the operation.

At an appropriate timing after the startup of the hydrogen system 200, a low-pressure high-humidity hydrogen-containing gas is supplied to the anode AN of the electrochemical hydrogen pump 100, and a voltage is applied between the anode AN and the cathode CA. At the startup of the hydrogen system 200, the first on-off valve 11 is closed.

Then hydrogen molecules are split into protons and electrons (formula (1)) in the anode catalyst layer of the anode AN. The protons migrate through the electrolyte membrane 30 and move to the cathode catalyst layer. The electrons move through the voltage applicator 31 to the cathode catalyst layer.

In the cathode catalyst layer, hydrogen molecules are regenerated (formula (2)). It is known that, when the protons migrate through the electrolyte membrane 30, a prescribed amount of water entrained with the protons moves as electroosmotic water from the anode AN to the cathode CA.

In this case, for example, when the cathode off-gas containing the compressed hydrogen generated in the cathode CA of the electrochemical hydrogen pump 100 is supplied to the hydrogen reservoir through a cathode off-gas flow passage, the hydrogen can be compressed in the cathode CA by increasing the pressure drop in the cathode off-gas supply flow passage using an on-off valve disposed in the cathode off-gas supply flow passage. Increasing the pressure drop in the cathode off-gas flow passage corresponds to reducing the opening of the on-off valve.

Anode: H₂ (low pressure) → 2H⁺ + 2e⁻ (1)

Cathode: 2H⁺ + 2e⁻ → H₂ (high pressure) (2)

In the hydrogen system 200, the following operation is performed. By applying a voltage between the anode AN and cathode CA of the electrochemical hydrogen pump 100, the protons extracted from the hydrogen-containing gas supplied to the anode AN are moved through the electrolyte membrane 30 to the cathode CA, and compressed hydrogen is thereby generated.

In the hydrogen system 200 in the present embodiment, while the first on-off valve 11 disposed in the first flow passage 1 for supplying the cathode off-gas containing the compressed hydrogen to the anode AN is opened, the voltage is applied between the anode AN and the cathode CA during a period of time from the startup of the hydrogen system 200 until the supply of the cathode off-gas containing the compressed hydrogen discharged from the cathode CA of the electrochemical hydrogen pump 100 to the hydrogen reservoir is started.

In this manner, before the cathode off-gas containing the compressed hydrogen discharged from the cathode CA of the electrochemical hydrogen pump 100 is supplied to the hydrogen reservoir, a desired amount of the cathode off-gas can be discharged to the anode AN.

For example, when the downstream end of the first flow passage 1 is connected to an appropriate gas supply flow passage, if the gas pressure inside the cathode CA is higher than the gas pressure at the connection portion of the gas supply flow passage, the first on-off valve 11 is temporarily opened before the voltage is applied between the anode AN and the cathode CA. In contrast, if the gas pressure inside the cathode CA is equal to or lower than the gas pressure at the connection portion, the voltage is applied between the anode AN and the cathode CA to increase the gas pressure inside the cathode, and then the first on-off valve 11 is temporarily opened.

In this manner, before the cathode off-gas containing the compressed hydrogen discharged from the cathode CA of the electrochemical hydrogen pump 100 is supplied to the hydrogen reservoir, a desired amount of the cathode off-gas can be discharged to the gas supply flow passage.

Then the first on-off valve 11 is closed, and the hydrogen in the cathode off-gas is temporarily stored in the hydrogen reservoir. The hydrogen stored in the hydrogen reservoir is appropriately supplied to a hydrogen customer. Examples of the hydrogen customer include fuel cells that generate electric power using hydrogen.

As described above, in the hydrogen system 200 in the present embodiment and the method for operating the hydrogen system 200, the hydrogen compression efficiency can be improved as compared to that in conventional systems.

Specifically, for example, during the stoppage of the hydrogen compression operation of the hydrogen system 200, since no hydrogen moves electrochemically from the anode AN to the cathode CA, the influence of impurity cross leakage that occurs so as to reduce the difference in chemical potential due to the concentrations of impurity gases present in the anode AN and the cathode CA increases. In this case, when the cathode off-gas is supplied to the hydrogen reservoir at the startup of the hydrogen system 200 without any treatment, the purity of the hydrogen in the hydrogen reservoir may decrease. Examples of the impurities include carbon dioxide gas in the reformed gas present in the anode AN.

For example, if the gas pressure inside the cathode CA becomes equal to or less than the outside pressure during the stoppage of the hydrogen compression operation of the hydrogen system 200, impurities may be mixed from the outside into the cathode. In this case also, when the cathode off-gas is supplied to the hydrogen reservoir at the startup of the hydrogen system 200 without any treatment, the purity of the hydrogen in the hydrogen reservoir may decrease. Examples of such impurities include nitrogen gas in the air.

However, in the hydrogen system 200 in the present embodiment and the method for operating the hydrogen system 200, the voltage applicator 31 applies the voltage with the first on-off valve 11 opened during a period of time from the startup of the hydrogen system 200 until the supply of the cathode off-gas to the hydrogen reservoir is started, and the hydrogen in the cathode off-gas supplied to the anode AN and containing impurities is thereby supplied to the cathode CA through the electrochemical reactions. In this manner, in the hydrogen system 200 in the present embodiment, the purity of the hydrogen in the cathode off-gas to be supplied to the hydrogen reservoir can be increased.

In the hydrogen system 200 in the present embodiment and the method for operating the hydrogen system 200, the cathode off-gas containing impurities is effectively reused as the hydrogen-containing gas to be supplied to the anode AN. Therefore, the efficiency of the hydrogen system 200 is higher than that when the cathode off-gas is subjected to combustion treatment and discharged to the outside of the system as in PTL 2.

In the hydrogen system 200 in the present embodiment and the method for operating the hydrogen system 200, the voltage applicator 31 applies a voltage between the anode AN and the cathode CA with the first on-off valve 11 opened during a period of time from the startup until the supply of the cathode off-gas to the hydrogen reservoir is started, so that the gas pressure inside the cathode CA can be increased as compared to that when the voltage is not applied. Therefore, in the hydrogen system 200 in the present embodiment and the method for operating the hydrogen system 200, the cathode off-gas containing impurities can be easily supplied from the cathode CA to the anode AN at the startup of the hydrogen system 200.

### (Example)

A hydrogen system 200 in an Example is the same as that in the first embodiment except for the details of control by the controller 50 described below.

The controller 50 causes the voltage applicator 31 to start the application of the voltage and then cause the first on-off valve 11 to open.

In this manner, in the hydrogen system 200 in the present Example, the cathode off-gas containing impurities can be supplied from the cathode CA to the anode AN more appropriately than in the case where the first on-off valve 11 is opened before the voltage applicator 31 starts the application of the voltage. For example, even when the gas pressure inside the cathode CA is equal to or less than the gas pressure inside the anode AN, the gas pressure inside the cathode CA can be increased by applying a voltage between the anode AN and the cathode CA at the startup of the hydrogen system 200. Therefore, in the hydrogen system 200 in the present Example, the cathode off-gas containing impurities can be easily supplied from the cathode CA to the anode AN at the startup of the hydrogen system 200.

The hydrogen system 200 in the present Example may be the same as the hydrogen system 200 in the first embodiment except for the above feature.

### (Second embodiment)

Fig. 2 is an illustration showing an example of a hydrogen system in a second embodiment.

In the example shown in Fig. 2, the hydrogen system 200 includes the electrochemical hydrogen pump 100, the voltage applicator 31, the first flow passage 1, a second flow passage 2, the first on-off valve 11, a second on-off valve 12, and the controller 50.

The electrochemical hydrogen pump 100, the voltage applicator 31, the first flow passage 1, and the first on-off valve 11 are the same as those in the first embodiment, and their descriptions will be omitted.

The second flow passage 2 is a flow passage for supplying the cathode off-gas containing the compressed hydrogen discharged from the cathode CA of the electrochemical hydrogen pump 100 to the hydrogen reservoir. The upstream end of the second flow passage 2 may be connected to any position so long as the second flow passage 2 is in communication with the cathode CA of the electrochemical hydrogen pump 100. When the electrochemical hydrogen pump 100 includes the stack described above, the upstream end of the second flow passage 2 may be in communication with, for example, the manifold for extraction of the cathode off-gas, but this is not a limitation. Another example of the connection position of the upstream end of the second flow passage will be described in a first modification.

The second on-off valve 12 is a valve disposed in the second flow passage 2. The second on-off valve 12 may have any structure so long as it can open and close the second flow passage 2. Examples of the second on-off valve 12 used include, but not limited to, drive valves driven by nitrogen gas etc. and electromagnetic valves.

The controller 50 causes the first on-off valve 11 to open before the second on-off valve 12 is opened.

In the hydrogen system 200 in the present embodiment, the first on-off valve 11 is opened before the second on-off valve 12 is opened. In this case, the amount of the cathode off-gas containing impurities and supplied to the hydrogen reservoir can be smaller than that when the first on-off valve 11 and the second on-off valve 12 are opened simultaneously and that when the timing at which the first on-off valve is opened and the timing at which the second on-off valve is opened are reversed.

The hydrogen system 200 in the present embodiment may be the same as the hydrogen system 200 in the first embodiment or the Example of the first embodiment except for the above feature.

### (First modification)

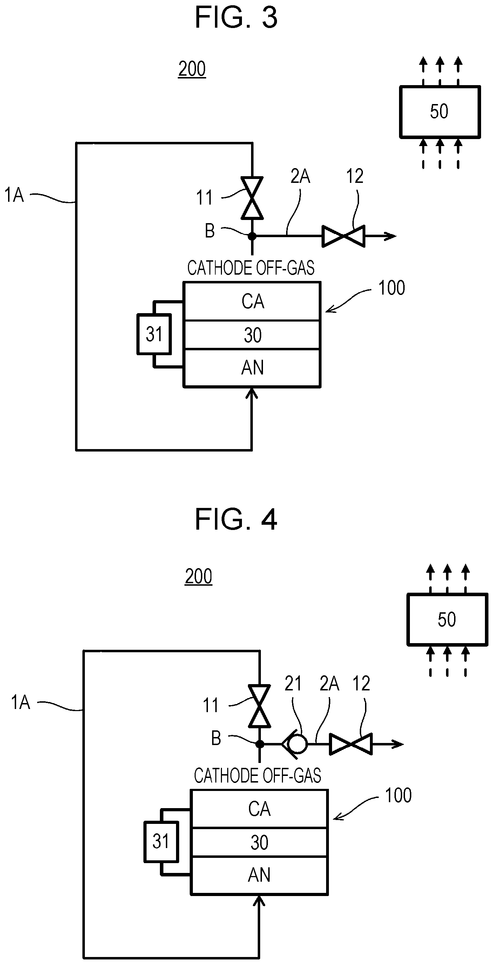

Fig. 3 is an illustration showing an example of a hydrogen system in a first modification of the second embodiment.

In the example shown in Fig. 3, the hydrogen system 200 includes the electrochemical hydrogen pump 100, the voltage applicator 31, a first flow passage 1A, a second flow passage 2A, the first on-off valve 11, the second on-off valve 12, and the controller 50.

The electrochemical hydrogen pump 100, the voltage applicator 31, and the first on-off valve 11 are the same as those in the first embodiment, and their descriptions will be omitted. The second on-off valve 12 is the same as that in the second embodiment, and its description will be omitted.

The first flow passage 1A branches off from the second flow passage 2A. Specifically, the first on-off valve 11 is disposed in the first flow passage 1A at a position downstream of a position B at which the first flow passage 1A branches off, and the second on-off valve 12 is disposed in the second flow passage 2A at a position downstream of the position B at which the first flow passage 1A branches off. The second flow passage 2A extends such that the cathode off-gas containing the compressed hydrogen discharged from the cathode CA of the electrochemical hydrogen pump 100 is supplied to the hydrogen reservoir, as described above.

In the hydrogen system 200 in the present modification described above, portions for discharging the cathode off-gas from the cathode CA in the electrochemical hydrogen pump 100 can be unified.

The hydrogen system 200 in the present modification may be the same as the hydrogen system 200 in any of the first embodiment, the Example in the first embodiment, and the second embodiment except for the above feature.

### (Second modification)

Fig. 4 is an illustration showing an example of a hydrogen system in a second modification of the second embodiment.

In the example shown in Fig. 4, the hydrogen system 200 includes the electrochemical hydrogen pump 100, the first flow passage 1A, the second flow passage 2A, the first on-off valve 11, the second on-off valve 12, a first check valve 21, and the controller 50.

The electrochemical hydrogen pump 100, the voltage applicator 31, and the first on-off valve 11 are the same as those in the first embodiment, and their description will be omitted. The second on-off valve 12 is the same as that in the second embodiment, and its description will be omitted. The first flow passage 1A and the second flow passage 2A are the same as those in the first modification of the second embodiment, and their descriptions will be omitted.

The first check valve 21 is a valve disposed in the second flow passage 2A at a position downstream of the point B at which the first flow passage 1A branches off. In the example shown in Fig. 4, the first check valve 21 is disposed in the second flow passage 2A at a position upstream of the second on-off valve 12, but this is not a limitation. For example, their arrangement positions may be reversed. The first check valve 21 is a valve that prevents a flow in a direction opposite to the flow of the cathode off-gas containing the compressed hydrogen discharged from the cathode CA of the electrochemical hydrogen pump 100.

In the hydrogen system 200 in the present modification, the first check valve 21 is disposed in the second flow passage 2A at a position downstream of the position B at which the first flow passage 1A branches off. Therefore, even when the first on-off valve 11 disposed in the first flow passage 1A is opened during a period of time from the startup of the hydrogen system 200 until the supply of the cathode off-gas to the hydrogen reservoir is started, the amount of hydrogen passing through the first flow passage 1A can be appropriately limited.

For example, when the high pressure hydrogen generated in the cathode CA is supplied to the hydrogen reservoir through the second flow passage 2A without providing the first check valve 21 in the second flow passage 2A, there is a possibility that the hydrogen in the hydrogen reservoir migrates through the second flow passage 2A and the first flow passage 1A in this order when the first on-off valve 11 disposed in the first flow passage 1A is opened. However, in the hydrogen system according to the present aspect, the first check valve 21 is disposed in the second flow passage 2A at a position downstream of the position B at which the first flow passage 1A branches off, so that the above possibility can be reduced. A reduction in the efficiency of the hydrogen compression operation of the electrochemical hydrogen pump 100 can thereby be prevented.

By closing the second on-off valve 12 disposed in the second flow passage 2A, the backflow of the hydrogen in the hydrogen reservoir to the first flow passage 1A can be limited. However, if the second on-off valve 12 malfunctions, it is difficult to limit the backflow of hydrogen into the first flow passage 12.

However, in the hydrogen system 200 in the present modification, since the first check valve 21 used has a simple structure, the above problem can be mitigated.

The hydrogen system 200 in the present modification may be the same as the hydrogen system 200 in any of the first embodiment, the Example of the first embodiment, the second embodiment, the first modification of the second embodiment except for the above feature.

### (Third embodiment)

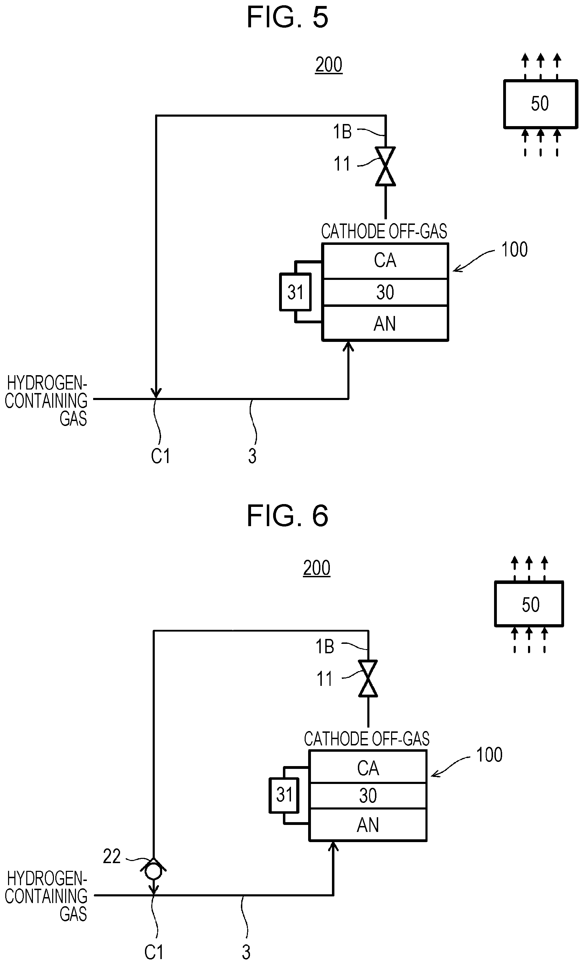

Fig. 5 is an illustration showing an example of a hydrogen system in a third embodiment.

In the example shown in Fig. 5, the hydrogen system 200 includes the electrochemical hydrogen pump 100, the voltage applicator 31, a first flow passage 1B, a third flow passage 3, the first on-off valve 11, and the controller 50.

The electrochemical hydrogen pump 100, the voltage applicator 31, and the first on-off valve 11 are the same as those in the first embodiment, and their descriptions will be omitted.

The first flow passage 1B is connected to the third flow passage 3 through which the hydrogen-containing gas is supplied to the anode AN of the electrochemical hydrogen pump 100. Specifically, the first flow passage 1B extends to a position C1 at which the first flow passage 1B merges with the third flow passage 3.

The downstream end of the third flow passage 3 may be connected to any position so long as the third flow passage 3 is in communication with the anode AN of the electrochemical hydrogen pump 100. When the electrochemical hydrogen pump 100 includes the stack described above, the downstream end of the third flow passage 3 may be in communication with, for example, the manifold for introduction of the hydrogen-containing gas. The upstream end of the third flow passage 3 may be connected to, for example, hydrogen-containing gas supply source. Examples of the hydrogen-containing gas supply source include hydrogen generators (such as reformers and water electrolyzers), hydrogen tanks, and hydrogen infrastructures.

In the hydrogen system 200 in the present embodiment described above, the cathode off-gas containing the compressed hydrogen discharged from the cathode CA of the electrochemical hydrogen pump 100 can be supplied to the anode AN through the first flow passage 1B and the third flow passage 3 when the first on-off valve 11 disposed in the first flow passage 1B is opened, so that it is unnecessary to discharge the cathode off-gas to the outside of the system. Therefore, in the hydrogen system 200 in the present embodiment, the cathode off-gas containing impurities is effectively reused as the hydrogen-containing gas to be supplied to the anode AN, so that the efficiency of the hydrogen system 200 is improved as compared to that when the cathode off-gas is discharged to the outside of the system.

The hydrogen system 200 in the present embodiment may be the same as the hydrogen system 200 in any of the first embodiment, the Example of the first embodiment, the second embodiment, and the first and second modifications of the second embodiment.

### (First modification)

Fig. 6 is an illustration showing an example of a hydrogen system in a first modification of the third embodiment.

In the example shown in Fig. 6, the hydrogen system 200 includes the electrochemical hydrogen pump 100, the voltage applicator 31, the first flow passage 1B, the third flow passage 3, the first on-off valve 11, a second check valve 22, and the controller 50.

The electrochemical hydrogen pump 100, the voltage applicator 31, and the first on-off valve 11 are the same as those in the first embodiment, and their descriptions will be omitted. The first flow passage 1B and the third flow passage 3 are the same as those in the third embodiment, and their descriptions will be omitted.

The second check valve 22 is a valve that is disposed in the first flow passage 1B at a position upstream of a position C1 at which the first flow passage 1B merges with the third flow passage 3 and prevents a flow in a direction opposite to the flow of the cathode off-gas discharged from the cathode CA of the electrochemical hydrogen pump 100. In the example shown in Fig. 6, the second check valve 22 is disposed in the first flow passage 1B at a position downstream of the first on-off valve 11, but this is not a limitation. For example, their arrangement positions may be reversed.

In the hydrogen system 200 in the present modification described above, the second check valve 22 is disposed in the first flow passage 1B. Therefore, even if the gas pressure inside the cathode CA is lower than the supply pressure of the hydrogen-containing gas flowing through the third flow passage 3 when the first on-off valve 11 disposed in the first flow passage 1B is opened, the backflow of the low-purity hydrogen-containing gas flowing through the third flow passage 3 to the cathode CA can be prevented.

The hydrogen system 200 in the present modification may be the same as the hydrogen system 200 in any of the first embodiment, the Example of the first embodiment, the second embodiment, the first and second modifications of the second embodiment, and the third embodiment except for the above feature.

### (Second modification)

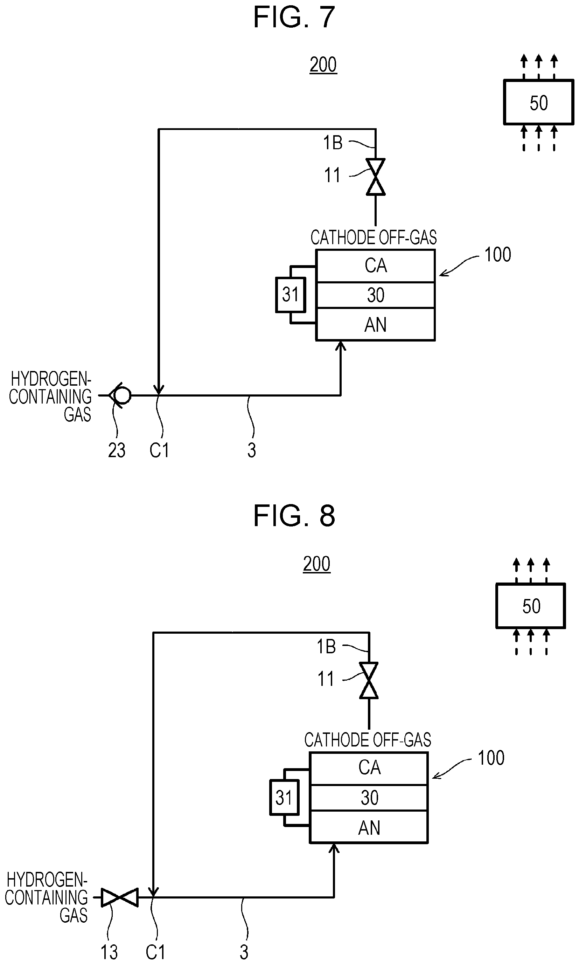

Fig. 7 is an illustration showing an example of a hydrogen system in a second modification of the third embodiment.

In the example shown in Fig. 7, the hydrogen system 200 includes the electrochemical hydrogen pump 100, the voltage applicator 31, the first flow passage 1B, the third flow passage 3, the first on-off valve 11, a third check valve 23, and the controller 50.

The electrochemical hydrogen pump 100, the voltage applicator 31, and the first on-off valve 11 are the same as those in the first embodiment, and their descriptions will be omitted. The first flow passage 1B and the third flow passage 3 are the same as those in the third embodiment, and their descriptions will be omitted.

The third check valve 23 is a valve that is disposed in the third flow passage 3 at a position upstream of the position C1 at which the first flow passage 1B merges with the third flow passage 3 and prevents a flow in a direction opposite to the flow of the hydrogen-containing gas to be supplied to the anode AN of the electrochemical hydrogen pump 100.

In the hydrogen system 200 in the present modification described above, the third check valve 23 is disposed in the third flow passage 3, so that, when the first on-off valve 11 disposed in the first flow passage 1B is opened, a flow of the high-pressure cathode off-gas to be supplied from the cathode CA to the anode AN to an anode gas supply system designed to be operated at low pressure can be prevented. Therefore, in the hydrogen system 200 in the present modification, the degree of damage to devices disposed in the anode gas supply system and designed to be operated at low pressure can be reduced as compared to that when the third check valve 23 is not provided in the third flow passage 3.

By closing an appropriate on-off valve (not shown) disposed in the third flow passage 3, the high-pressure cathode off-gas can be prevented from flowing into the anode gas supply system designed to be operated at low pressure. However, if this on-off valve malfunctions, it is difficult to prevent the flow of the cathode off-gas into the anode gas supply system.

However, the hydrogen system 200 in the present modification uses the third check valve 23 having a simple structure, so that the above problem can be mitigated.

The hydrogen system 200 in the present modification may be the same as the hydrogen system 200 in any of the first embodiment, the Example of the first embodiment, the second embodiment, the first and second modifications of the second embodiment, the third embodiment, and the first modification of the third embodiment except for the above feature. For example, the same valve as the second check valve 22 in the first modification of the third embodiment may be disposed in the first flow passage 1B in Fig. 7.

### (Third modification)

Fig. 8 is an illustration showing an example of a hydrogen system in a third modification of the third embodiment.

In the example shown in Fig. 8, the hydrogen system 200 includes the electrochemical hydrogen pump 100, the voltage applicator 31, the first flow passage 1B, the third flow passage 3, the first on-off valve 11, a third on-off valve 13, and the controller 50.

The electrochemical hydrogen pump 100, the voltage applicator 31, and the first on-off valve 11 are the same as those in the first embodiment, and their descriptions will be omitted. The first flow passage 1B and the third flow passage 3 are the same as those in the third embodiment, and their descriptions will be omitted.

The third on-off valve 13 is a valve disposed in the third flow passage 3 at a position upstream of the position C1 at which the first flow passage 1B merges with the third flow passage 3. The third on-off valve 13 may have any structure so long as it can open and close the third flow passage 3 at the position upstream of the position C at which the first flow passage 1B merges with the third flow passage 3. Examples of the third on-off valve 13 that can be used include, but not limited to, drive valves driven by nitrogen gas etc. and electromagnetic valves.

The controller 50 causes the voltage applicator 31 to apply the voltage with the first on-off valve 11 opened and the third on-off valve 13 closed.

In the hydrogen system 200 in the present modification described above, the voltage applicator 31 applies the voltage with the first on-off valve 11 opened and the third on-off valve 13 closed during a period of time from the startup until the supply of the cathode off-gas to the hydrogen reservoir is started, and the hydrogen in the cathode off-gas containing impurities and supplied to the anode AN is thereby supplied to the cathode CA through the electrochemical reactions. Therefore, in the hydrogen system 200 in the present modification, the purity of the hydrogen in the cathode off-gas to be supplied to the hydrogen reservoir can be increased. In the hydrogen system 200 in the present modification, the cathode off-gas containing impurities is effectively reused as the hydrogen-containing gas to be supplied to the anode AN. Therefore, the efficiency of the hydrogen system 200 is improved as compared to that when the cathode off-gas is discharged to the outside of the system.

In the hydrogen system 200 in the present modification, by closing the third on-off valve 13 disposed in the third flow passage 3 when the first on-off valve 11 disposed in the first flow passage 1B is opened, the high-pressure cathode off-gas to be supplied from the cathode CA to the anode AN can be prevented from flowing into the anode gas supply system designed to be operated at low pressure. Therefore, in the hydrogen system 200 in the present modification, the degree of damage to devices disposed in the anode gas supply system and designed to be operated at low pressure can be reduced as compared to that when the third on-off valve 13 is not disposed in the third flow passage 3.

The hydrogen system 200 in the present modification may be the same as the hydrogen system 200 in any of the first embodiment, the Example of the first embodiment, the second embodiment, the first and second modifications of the second embodiment, the third embodiment, and the first modification of the third embodiment except for the above feature. For example, the same valve as the second check valve 22 in the first modification of the third embodiment may be disposed in the first flow passage 1B in Fig. 8.

### (Fourth embodiment)

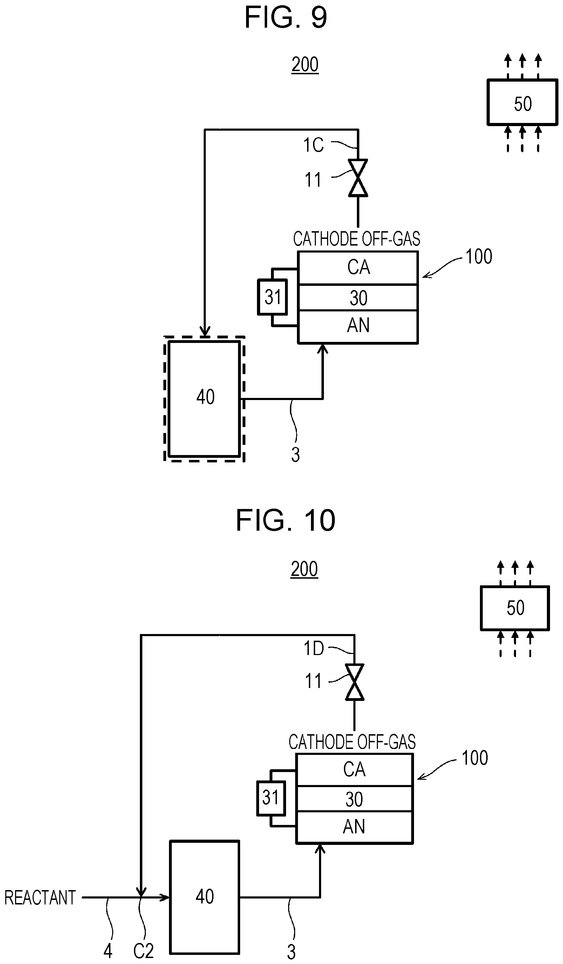

Fig. 9 is an illustration showing an example of a hydrogen system in a fourth embodiment.

In the example shown in Fig. 9, the hydrogen system 200 includes the electrochemical hydrogen pump 100, the voltage applicator 31, a first flow passage 1C, the third flow passage 3, the first on-off valve 11, a hydrogen generator 40, and the controller 50.

The electrochemical hydrogen pump 100, the voltage applicator 31, and the first on-off valve 11 are the same as those in the first embodiment, and their descriptions will be omitted. The third flow passage 3 is the same as that in the third embodiment, and its description will be omitted.

The hydrogen generator 40 is a device that generates the hydrogen-containing gas through a reforming reaction using a raw material. The hydrogen generator 40 may have any structure so long as it can generate the hydrogen-containing gas through the reforming reaction using the raw material.

The hydrogen generator 40 includes, for example, a reformer. In the reformer, the hydrogen-containing gas (reformed gas) is generated through the reforming reaction of the raw material. The reforming reaction may be in any form. Examples of the reforming reaction include a water vapor reforming reaction, an autothermal reaction, and a partial oxidation reaction. The raw material may be a gas containing an organic compound composed of at least carbon and hydrogen such as town gas composed mainly of methane, natural gas, or LPG or may be a liquid. Examples of the liquid include alcohols such as methanol. The hydrogen generator 40 may include a CO reducer that reduces the amount of carbon monoxide (CO) in the reformed gas. When the reforming reaction is performed in the hydrogen generator 40, various apparatuses and devices such as a combustor, a raw material feeder, a water feeder, and various detectors (such as a temperature sensor and a flow meter) are necessary in addition to the reformer. However, these apparatuses and devices are all well known.

The first flow passage 1C is connected to the hydrogen generator 40. The downstream end of the first flow passage 1C may be connected to any position so long as the first flow passage 1C is in communication with the hydrogen generator 40. For example, the downstream end of the first flow passage 1C may be connected to an appropriate flow passage. The details of this will be described in an Example .

In the hydrogen system in the present embodiment, when the first on-off valve 11 disposed in the first flow passage 1C is opened, the cathode off-gas containing the compressed hydrogen discharged from the cathode CA of the electrochemical hydrogen pump 100 can be supplied to the hydrogen generator 40 through the first flow passage 1C, so that it is unnecessary to discharge the cathode off-gas to the outside of the system. Therefore, in the hydrogen system 200 in the present embodiment, the hydrogen in the cathode off-gas containing impurities is effectively reused in the hydrogen generator 40, and the efficiency of the hydrogen system 200 is improved as compared to that when the cathode off-gas is discharged to the outside of the system.

The hydrogen system 200 in the present embodiment may be the same as the hydrogen system 200 in any of the first embodiment, the Example of the first embodiment, the second embodiment, the first and second modifications of the second embodiment, the third embodiment, and the first to third modifications of the third embodiment except for the above feature.

### (Example)

Fig. 10 is an illustration showing an example of a hydrogen system in an Example of the fourth embodiment.

In the example shown in Fig. 10, the hydrogen system 200 includes the electrochemical hydrogen pump 100, the voltage applicator 31, a first flow passage 1D, the third flow passage 3, a reactant flow passage 4, the first on-off valve 11, the hydrogen generator 40, and the controller 50.

The electrochemical hydrogen pump 100, the voltage applicator 31, and the first on-off valve 11 are the same as those in the first embodiment, and their descriptions will be omitted. The third flow passage 3 is the same as that in the third embodiment, and its description will be omitted. The hydrogen generator 40 is the same as that in the fourth embodiment, and its description will be omitted.

The reactant flow passage 4 is a flow passage through which a reactant for the reforming reaction is supplied to the hydrogen generator 40. Examples of the reactant include the raw material, water, and air. For example, when the reforming reaction is a water vapor reforming reaction or an autothermal reaction, the reactants are, for example, the raw material and water vapor or the raw material, water vapor, and oxygen.

As shown in Fig. 10, the first flow passage 1D merges with the reactant flow passage 4. Specifically, the first flow passage 1D extends to a position C2 at which the first flow passage 1D merges with the reactant flow passage 4. When the reactant is the raw material, the upstream end of the reactant flow passage 4 is connected to an appropriate raw material source. For example, when the raw material used is town gas, the upstream end of the reactant flow passage 4 is connected to a town gas tap used as the raw material source.

In the hydrogen system 200 in the present Example described above, when the first on-off valve 11 disposed in the first flow passage 1D is opened, the cathode off-gas containing the compressed hydrogen discharged from the cathode CA of the electrochemical hydrogen pump 100 can be supplied to the hydrogen generator 40 through the first flow passage 1D and the reactant flow passage 4, so that it is unnecessary to discharge the cathode off-gas to the outside of the system. Therefore, in the hydrogen system 200 in the present Example, the cathode off-gas containing impurities is mixed with the reactant, and the hydrogen in the cathode off-gas is effectively reused in the hydrogen generator 40, so that the efficiency of the hydrogen system 200 is improved as compared to that when the cathode off-gas is discharged to the outside of the system.

The hydrogen system 200 in the present Example may be the same as the hydrogen system 200 in any of the first embodiment, the Example of the first embodiment, the second embodiment, the first and second modifications of the second embodiment, the third embodiment, the first to third modifications of the third embodiment, and the fourth embodiment except for the above feature.

### (Modification)

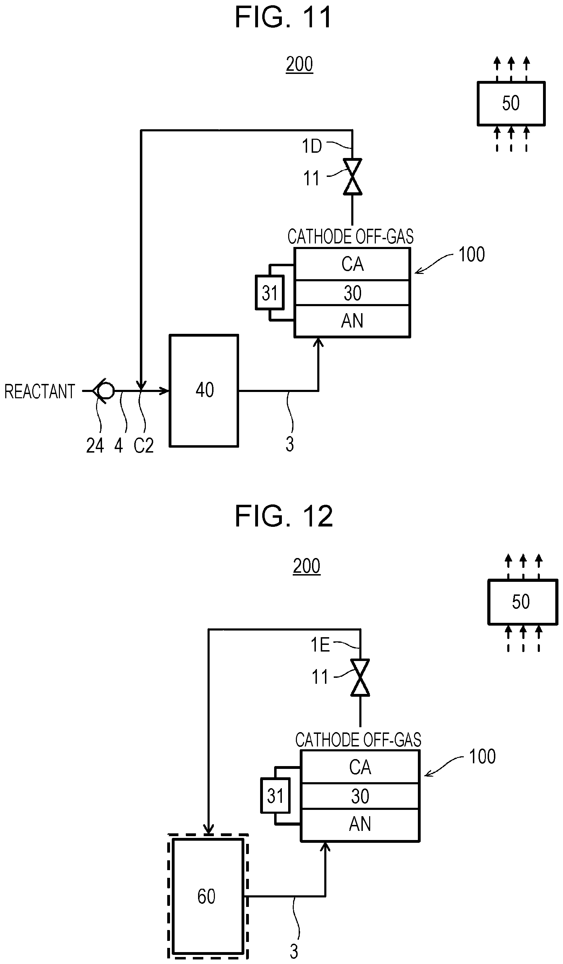

Fig. 11 is an illustration showing an example of a hydrogen system in a modification of the fourth embodiment.

In the example shown in Fig. 11, the hydrogen system 200 includes the electrochemical hydrogen pump 100, the voltage applicator 31, the first flow passage 1D, the third flow passage 3, the reactant flow passage 4, the first on-off valve 11, a fourth check valve 24, the hydrogen generator 40, and the controller 50.

The electrochemical hydrogen pump 100, the voltage applicator 31, and the first on-off valve 11 are the same as those in the first embodiment, and their descriptions will be omitted. The third flow passage 3 is the same as that in the third embodiment, and its description will be omitted. The hydrogen generator 40 is the same as that in the fourth embodiment, and its description will be omitted. The first flow passage 1D and the reactant flow passage 4 are the same as those in the Example of the fourth embodiment, and their descriptions will be omitted.

The fourth check valve 24 is a valve that is disposed in the reactant flow passage 4 at a position upstream of the position C2 at which the first flow passage 1C merges with the reactant flow passage 4 and prevents a flow in a direction opposite to the flow of the reactant to be supplied to the hydrogen generator 40.

In the hydrogen system 200 in the present modification described above, the fourth check valve 24 is disposed in the reactant flow passage 4. Therefore, when the first on-off valve 11 disposed in the first flow passage 1C is opened, the high-pressure cathode off-gas to be supplied from the cathode CA to the hydrogen generator 40 is prevented from flowing into a reactant supply system designed to be operated at low pressure.

Therefore, in the hydrogen system 200 in the present modification, the degree of damage to devices disposed in the reactant supply system and designed to be operated at low pressure can be reduced as compared to that when the fourth check valve 24 is not provided in the reactant flow passage 4. In the hydrogen system 200 in the present modification, when the reactant is, for example, the raw material, damage to devices disposed in a raw material supply system and designed to be operated at low pressure can be reduced.

By closing an appropriate on-off valve (not shown) disposed in the reactant flow passage 4, the high-pressure cathode off-gas can be prevented from flowing into the reactant supply system designed to be operated at low pressure. However, if this on-off valve malfunctions, it is difficult to prevent the flow of the cathode off-gas.

However, the hydrogen system 200 in the present modification uses the fourth check valve 24 having a simple structure, so that the above problem can be mitigated.

The hydrogen system 200 in the present modification may be the same as the hydrogen system 200 in any of the first embodiment, the Example of the first embodiment, the second embodiment, the first and second modifications of the second embodiment, the third embodiment, the first to third modifications of the third embodiment, the fourth embodiment, and the Example of the fourth embodiment except for the above feature. For example, the same valve as the second check valve 22 in the first modification of the third embodiment may be disposed in the first flow passage 1D in Fig. 11.

### (Fifth embodiment)

Fig. 12 is an illustration showing an example of a hydrogen system in a fifth embodiment.

In the example shown in Fig. 12, the hydrogen system 200 includes the electrochemical hydrogen pump 100, the voltage applicator 31, a first flow passage 1E, the third flow passage 3, the first on-off valve 11, a hydrogen purifier 60, and the controller 50.

The electrochemical hydrogen pump 100, the voltage applicator 31, and the first on-off valve 11 are the same as those in the first embodiment, and their descriptions will be omitted. The third flow passage 3 is the same as that in the third embodiment, and its description will be omitted.

The hydrogen purifier 60 is a device that increases the concentration of the hydrogen in the hydrogen-containing gas. The first flow passage 1E is connected to the hydrogen purifier 60. The downstream end of the first flow passage 1E may be connected to any position so long as the first flow passage 1E is in communication with the hydrogen purifier 60. For example, although not illustrated, the downstream end of the first flow passage 1E may be connected to a gas flow passage through which a low-purity hydrogen-containing gas to be supplied to the hydrogen purifier 60 flows.

The hydrogen purifier 60 may include a hydrogen purification unit that generates a purified hydrogen-containing gas by applying a voltage between an anode and a cathode to move hydrogen in the hydrogen-containing gas supplied to the anode to the cathode through an electrolyte membrane. In the hydrogen system 200 in the present embodiment, the hydrogen purification unit includes an electrochemical hydrogen pump designed to be operated at low pressure. Specifically, a stack in the hydrogen purification unit is the same as the stack in the electrochemical hydrogen pump 100 except that the stacked members are formed of materials designed to be operated at low pressure and stacked in a form designed to be operated at low pressure. The hydrogen purification unit can purify, for example, low-purity by-product hydrogen that is a by-product from a steelmaking factory etc. The hydrogen-containing gas to be supplied to the anode AN of the electrochemical hydrogen pump 100 can thereby be obtained.

The hydrogen purifier 60 may include a gas separator. The gas separator can purify, for example, low-purity by-product hydrogen that is a by-product from a steelmaking factory etc. by a pressure swing adsorption method (PSA method). The hydrogen-containing gas to be supplied to the anode AN of the electrochemical hydrogen pump 100 can thereby be obtained.

In the hydrogen system 200 in the present embodiment described above, when the first on-off valve 11 disposed in the first flow passage 1E is opened, the cathode off-gas containing the compressed hydrogen discharged from the cathode CA of the electrochemical hydrogen pump 100 can be supplied to the hydrogen purifier 60 through the first flow passage 1E, so that it is unnecessary to discharge the cathode off-gas to the outside of the system. Therefore, in the hydrogen system 200 in the present embodiment, the hydrogen in the cathode off-gas containing impurities is effectively used in the hydrogen purifier 60, and the efficiency of the hydrogen system 200 is improved as compared to that when the cathode off-gas is discharged to the outside of the system.

The hydrogen system 200 in the present embodiment may be the same as the hydrogen system 200 in any of the first embodiment, the Example of the first embodiment, the second embodiment, the first and second modifications of the second embodiment, the third embodiment, the first to third modifications of the third embodiment, the fourth embodiment, the Example of the fourth embodiment, and the modification of the fourth embodiment except for the above feature.

The first embodiment, the Example of the first embodiment, the second embodiment, the first and second modifications of the second embodiment, the third embodiment, the first to third modifications of the third embodiment, the fourth embodiment, the Example of the fourth embodiment, the modification of the fourth embodiment, and the fifth embodiment may be combined with each other so long as they do not exclude each other.

From the foregoing description, many modifications and other embodiments of the present disclosure will be apparent to those skilled in the art. Therefore, the foregoing description is to be construed as illustrative only and is provided for the purpose of teaching those skilled in the art the best mode of carrying out the present disclosure. The details of the structure and/or function of the present disclosure may be substantially changed without departing from the spirit of the present disclosure. For example, the present disclosure is applicable to a hydrogen system including a compressor other than the electrochemical hydrogen pump 100 such as a water electrolyzer.

### Industrial Applicability

The aspects of the present disclosure can be used for a hydrogen system having higher hydrogen compression efficiency than conventional systems and for a method for operating the hydrogen system.

### Reference Signs List

1 first flow passage
1A first flow passage
1B first flow passage
1C first flow passage
1D first flow passage
1E first flow passage
2 second flow passage
2A second flow passage
3 third flow passage
4 reactant flow passage
11 first on-off valve
12 second on-off valve
13 third on-off valve
21 first check valve
22 second check valve
23 third check valve
24 fourth check valve
30 electrolyte membrane
31 voltage applicator
40 hydrogen generator
50 controller
60 hydrogen purifier
100 electrochemical hydrogen pump
200 hydrogen system
AN anode
CA cathode

## Claims

1. A hydrogen system comprising:
a compressor that includes an anode, a cathode, and an electrolyte membrane interposed therebetween and generates compressed hydrogen by applying a voltage between the anode and the cathode to move protons extracted from anode fluid supplied to the anode to the cathode;
a voltage applicator that applies the voltage between the anode and the cathode;
a first flow passage through which a cathode off-gas containing the compressed hydrogen discharged from the cathode is supplied to the anode of the compressor;
a first on-off valve disposed in the first flow passage; and
a controller that causes the voltage applicator to apply the voltage with the first on-off valve opened during a period of time from startup of the hydrogen system until supply of the cathode off-gas to a hydrogen reservoir is started.

2. The hydrogen system according to Claim 1, wherein the controller causes the voltage applicator to start application of the voltage and then cause the first on-off valve to open.

3. The hydrogen system according to Claim 1 or 2, further comprising:
a second flow passage through which the cathode off-gas is supplied to the hydrogen reservoir; and
a second on-off valve disposed in the second flow passage,
wherein the controller causes the first on-off valve to open before the second on-off valve is opened.

4. The hydrogen system according to Claim 3, wherein the first flow passage branches off from the second flow passage.

5. The hydrogen system according to Claim 4, further comprising a first check valve disposed in the second flow passage at a position downstream of a position at which the first flow passage branches off.

6. The hydrogen system according to any one of Claims 1 to 5, wherein the anode fluid is hydrogen-containing gas, and
wherein the first flow passage is connected to a third flow passage through which the hydrogen-containing gas is supplied to the anode of the compressor.

7. The hydrogen system according to Claim 6, further comprising a second check valve disposed in the first flow passage at a position upstream of a position at which the first flow passage merges with the third flow passage, the second check valve preventing a flow in a direction opposite to a flow of the cathode off-gas discharged from the cathode of the compressor.

8. The hydrogen system according to Claim 6 or 7, further comprising a third check valve disposed in the third flow passage at a position upstream of a position at which the first flow passage merges with the third flow passage, the third check valve preventing a flow in a direction opposite to a flow of the hydrogen-containing gas to be supplied to the anode of the compressor.

9. The hydrogen system according to any one of Claims 1 to 8, wherein the anode fluid is hydrogen-containing gas,
wherein the hydrogen system further comprises a hydrogen generator that generates the hydrogen-containing gas through a reforming reaction using a raw material, and
wherein the first flow passage is connected to the hydrogen generator.

10. The hydrogen system according to Claim 9, further comprising a reactant flow passage through which a reactant for the reforming reaction is supplied to the hydrogen generator, and
wherein the first flow passage merges with the reactant flow passage.

11. The hydrogen system according to Claim 10, further comprising a fourth check valve disposed in the reactant flow passage at a position upstream of a position at which the first flow passage merges with the reactant flow passage, the fourth check valve preventing a flow in a direction opposite to a flow of the reactant to be supplied to the hydrogen generator.

12. The hydrogen system according to Claim 10 or 11, wherein the reactant is the raw material.

13. The hydrogen system according to any one of Claims 1 to 12, further comprising: a third flow passage through which the anode fluid to be supplied to the anode flows and with which the first flow passage merges; and a third on-off valve disposed in the third flow passage at a position upstream of a position at which the first flow passage merges with the third flow passage,
wherein the controller causes the voltage applicator to apply the voltage with the first on-off valve opened and the third on-off valve closed.

14. The hydrogen system according to any one of Claims 1 to 8, wherein the anode fluid is hydrogen-containing gas,
wherein the hydrogen system further comprises a hydrogen purifier that increases the concentration of the hydrogen in the hydrogen-containing gas, and
wherein the first flow passage is connected to the hydrogen purifier.

15. A method for operating a hydrogen system, the method comprising the steps of:
generating compressed hydrogen by applying a voltage between an anode of a compressor and a cathode thereof to move protons extracted from anode fluid supplied to the anode to the cathode through an electrolyte membrane; and applying a voltage between the anode and the cathode with a first on-off valve opened during a period of time from startup of the hydrogen system until supply of a cathode off-gas containing the compressed hydrogen discharged from the cathode of the compressor to a hydrogen reservoir is started, the first on-off valve being disposed in a first flow passage through which the cathode off-gas is supplied to the anode of the compressor.
